# EUROPEAN PATENT APPLICATION

(11) **EP 4 390 857 A1**
(43) Date of publication of application: **26.06.2024**
(21) Application number: 22216116.8
(22) Date of filing: 22.12.2022
(51) Int. Cl.: G06V 10/25, G06V 20/59, G06V 40/16, G06V 40/18

(54) **A VEHICULAR SYSTEM AND METHOD FOR DETERMINING ANOMALIES INSIDE OF A VEHICLE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: NILSSON, Magnus, 44836 FLODA (SE); GARDTMAN, Angelika, 41249 GÖTEBORG (SE)
(74) Representative: Zacco Sweden AB

(57) **Abstract**

The disclosure relates to a vehicular system for determining anomalies inside of a vehicle, the system comprises a gaze monitoring device configured to monitor a gaze direction of a vehicle occupant in relation to the vehicle, a processing circuitry operatively connected to the gaze monitoring device configured to determine a region of interest based on the monitored gaze direction, and determine whether the region of interest should be regarded as an anomaly from a stored baseline information of an interior of the vehicle. The disclosure further relates to a method for determining anomalies inside of a vehicle and a computer program product.

## Description

### Technical field

The present disclosure relates to a vehicular system for determining anomalies inside of a vehicle, a method for determining anomalies inside of a vehicle and a computer program product.

### Background art

Today there are vehicles that are used by plural different vehicle occupants, such as rental vehicles, but also e.g. taxi vehicles that transport different vehicle occupants all day long. In the future, it is expected to be more unmanned vehicles such as autonomous taxi vehicles and autonomous shuttle vehicles that transport different vehicle occupants.

Vehicles that are used by many different vehicle occupants are exposed to wear and tear of the passenger compartment of the vehicle. One problem is to keep track of the wear and tear. There is in particular a problem with keeping track of wear and tear of the passenger compartment of a vehicle that is autonomous since there is no driver that keep track of the wear and tear.

Today wear and tear has to be done by regular inspections by individuals. Those inspections cost money and time since the usage of the vehicle is then paused due to the time the inspection takes. For autonomous vehicles, the time needed for inspection can be even longer due to the fact that the vehicle needs to go to a depot for the inspection.

Also for ordinary vehicles today, such as taxi vehicles but also family vehicles there is also a desire to keep track of the wear and tear and to minimize the time for inspection of the vehicle.

This is also a desire to inspect wear and tear of vehicles used by different professionals, such as transport vehicles, police vehicles, but also passenger busses, commuter trains, shuttle busses, lifts etc.

### Summary

There is hence a demand for minimizing inspections of wear and tear in order to minimize the time when the vehicle is not used. The inventors have realized that humans are very good at spotting anomalies, things that don't fit in. The inventors has realized to use that information in order to spot problems inside of a vehicle.

It is an object of the present disclosure to mitigate, alleviate or eliminate one or more of the above-identified deficiencies and disadvantages in the prior art and solve at least the above mentioned problem.

According to a first aspect there is provided a vehicular system for determining anomalies inside of a vehicle. The system comprises a gaze monitoring device configured to monitor a gaze direction of a vehicle occupant in relation to the vehicle, a processing circuitry operatively connected to the gaze monitoring device configured to determine a region of interest based on the monitored gaze direction, and determine whether the region of interest should be regarded as an anomaly from a stored baseline information of an interior of the vehicle.

An advantage with this first aspect is that an anomaly of the interior of the vehicle can be determined without the need for an inspection by another person, which minimizes or even eliminates the need for the inspection by another person, but instead the gaze direction of the vehicle occupant is used for the determination of an anomaly of the interior of the vehicle.

According to some embodiments, the processing circuitry is further configured to in response to the determination that the region of interest is an anomaly from the stored baseline information of the vehicle interior initiating a remedial action to have the determined anomaly taken care of.

An advantage with this embodiment is that an inspection and/or a remedial action can be initiated only when considered necessary, thereby saving time for minimizing the down time when the vehicle cannot be used.

According to some embodiments, the initiation of the remedial action comprises communicating a message with information about the anomaly to a vehicle interior cleaning service provider.

An advantage with this embodiment is that interior cleaning service provider can be informed remotely via the communicated message, and only when considered necessary, thereby saving time for minimizing the down time when the vehicle cannot be used.

According to some embodiments, the gaze direction monitoring is performed while the vehicle is operating to provide a transport service to take the vehicle occupant to a destination.

An advantage with this embodiment is that the gaze direction monitoring is performed only when a vehicle occupant is present in the vehicle to use the determination of a region of interest based on each vehicle occupant when the vehicle is operating to provide a transport service.

According to some embodiments, the region of interest is determined based on when the accumulative time that the vehicle occupant is gazing in a certain gaze direction is above a predefined threshold time value and/or when the number of times over a predetermined time period that the vehicle occupant is gazing in the certain direction is above a predefined threshold number of times value.

An advantage with this embodiment is that the determination of the region of interest can be more precise based on accumulative obtained data indicative a region of interest.

According to some embodiments, the processing circuitry is further configured to determine a region of interest heat map, based on at least a first region of interest, to visualize at least a first region of interest to a user via a user interface of the system in order to ease up inspection of possible anomalies inside of the vehicle.

An advantage with this embodiment is that a region of interest can be visualized via a user interface e.g. in form of three dimensional heat mat graph onto an image representation of the interior of the vehicle.

According to some embodiments, the processing circuitry is further configured to identify a face expression of the vehicle occupant when gazing at the region of interest, and determine a predefined feeling associated with the region of interest based on the identified face expression of the vehicle occupant and based on predetermined generic face expressions of humans associated with predetermined feelings.

An advantage with this embodiment is that by combining the region of interest information with information about how the vehicle occupant feels when gazing at the region of interest, the determination whether the region of interest should be regarded as an anomaly can also include if the anomaly is positive or negative, e.g. fun or disgusting.

According to a second aspect there is provided a method for determining anomalies inside of a vehicle. The method comprising the step of monitoring a gaze direction of a vehicle occupant, determining a region of interest based on the monitored gaze direction, and the step of determining whether the region of interest should be regarded as an anomaly from a stored baseline information of an interior of the vehicle.

An advantage with this second aspect is that an anomaly of the interior of the vehicle can be determined without the need for an inspection by another person, which minimizes or even eliminates the need for the inspection by another person, but instead the gaze direction of the vehicle occupant is used for the determination of an anomaly of the interior of the vehicle.

According to some embodiments, in response to the determination that the region of interest is an anomaly from the stored baseline information of the vehicle interior initiating a remedial action to have the determined anomaly taken care of.

An advantage with this embodiment is that an inspection and/or a remedial action can be initiated only when considered necessary, thereby saving time for minimizing the down time when the vehicle cannot be used.

According to some embodiments, the initiation of the remedial action comprises communicating a message with information about the anomaly to a vehicle interior cleaning service provider.

An advantage with this embodiment is that interior cleaning service provider can be informed remotely via the communicated message, and only when considered necessary, thereby saving time for minimizing the down time when the vehicle cannot be used.

According to some embodiments, the gaze direction monitoring is performed while the vehicle is operating to provide a transport service to take the vehicle occupant to a destination.

An advantage with this embodiment is that the gaze direction monitoring is performed only when a vehicle occupant is present in the vehicle to use the determination of a region of interest based on each vehicle occupant when the vehicle is operating to provide a transport service.

According to some embodiments, the region of interest is determined based on when the accumulative time that the vehicle occupant is gazing in a certain direction is above a predefined threshold time value and/or when the number of times over a predetermined time period that the vehicle occupant is gazing in the certain direction is above a predefined threshold number of times value.

An advantage with this embodiment is that the determination of the region of interest can be more precise based on accumulative obtained data indicative a region of interest.

According to some embodiments, the method further comprises the step of determining a region of interest heat map, based on at least a first region of interest, to visualize the at least first region of interest to a user via a user interface of the system in order to ease up inspection of possible anomalies inside of the vehicle.

An advantage with this embodiment is that a region of interest can be visualized via a user interface e.g. in form of three dimensional heat mat graph onto an image representation of the interior of the vehicle.

According to some embodiments, the method further comprises the step of identifying a face expression of the vehicle occupant when gazing at the region of interest, and the step of determining a predefined feeling associated with the region of interest based on the identified face expression of the vehicle occupant and based on predetermined generic face expressions of humans associated with predetermined feelings.

An advantage with this embodiment is that by combining the region of interest information with information about how the vehicle occupant feels when gazing at the region of interest, the determination whether the region of interest should be regarded as an anomaly can also include if the anomaly is positive or negative, e.g. disgusting or fun.

According to a third aspect there is provided a computer program product comprising a non-transitory computer readable medium, having thereon a computer program comprising program instructions, the computer program being loadable into a processing circuitry and configured to cause execution of the method when the computer program is run by the processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates an example vehicular system for determining anomalies inside of a vehicle according to an embodiment of the present disclosure.
Figure 2 illustrates an example vehicular system for determining anomalies inside of an autonomous vehicle according to an embodiment of the present disclosure
Figure 3 illustrates a flow chart of the method steps according to the second aspect of the disclosure.
Figure 4 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

The inventors have realized that humans are very good at spotting anomalies, things that don't fit in. The inventors has realized to use that information in order to spot problems inside of a vehicle.

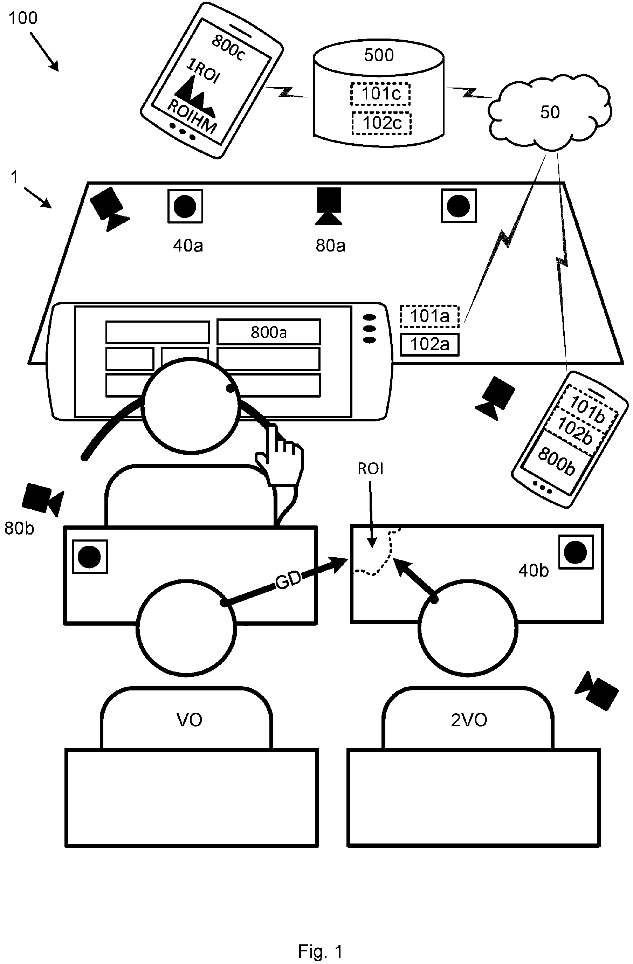

Figure 1 illustrates an example vehicular system 100 for determining anomalies inside of a vehicle 1 according to an embodiment of the present disclosure.

The first aspect of this disclosure shows a vehicular system 100 for determining anomalies inside of a vehicle 1. The system 100 comprises a gaze monitoring device 40a,40b configured to monitor a gaze direction GD of a vehicle occupant VO in relation to the vehicle 1.

According to some embodiments the gaze monitoring device 40a, 40b is a camera device configured to perform gaze tracking to monitor a gaze direction GD of a vehicle occupant VO. According to some embodiments the gaze tracking is performed by image analysis images of the vehicle occupant VO. According to some embodiments the gaze monitoring device 40a, 40b is further configured to obtain images of the vehicle occupant VO.

Figure 1 illustrates an example how gaze monitoring devices 40a, 40b can be arranged in the vehicle 1. In the example a first gaze monitoring device 40a is arranged at the front window facing the vehicle occupants and a second gaze monitoring device 40b is arranged at a front seat facing vehicle occupants in the back seat. In the example illustration in Figure 1 the vehicle occupant VO is seated in the back seat of the vehicle next to a second vehicle occupant 2VO.

The system 100 further comprises a processing circuitry 102a,102b,102c.

According to some embodiments the processing circuitry 102a is the processing circuitry of an on-board vehicle computer, as illustrated in Figure 1.

According to some embodiments the processing circuitry 102b is comprised in an electronic device connectable to the vehicular system 100 via a wireless communication network 50, as illustrated in Figure 1.

According to some embodiments the processing circuitry 102c is comprised in a remote electronic device 500 connectable to the vehicular system 100 via a wireless communication network 50, as illustrated in Figure 1.

According to some embodiments the vehicular system 100 further comprises a memory 101a,101b,101c configured to store data.

According to some embodiments the memory 101a is the memory of an on-board vehicle computer, as illustrated in Figure 1.

According to some embodiments the memory 101b is comprised in an electronic device connectable to the vehicular system 100 via the wireless communication network 50, as illustrated in Figure 1.

According to some embodiments the memory 101c is comprised in a remote electronic device 500 connectable to the vehicular system 100 via a wireless communication network 50, as illustrated in Figure 1.

According to some embodiments the wireless communication network 50, as illustrated in Figure 1, is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network.

According to some embodiments the wireless communication network 50 is a standardized wireless local area network such as a Wireless Local Area Network, WLAN, Bluetooth^{™}, ZigBee, Ultra-Wideband, Radio Frequency Identification, RFID, or similar network.

According to some embodiments wireless communication network 50 can also be a combination of both a local area network and a wide area network.

According to some embodiments the wireless communication network 50 is defined by common Internet Protocols.

The processing circuitry 102a,102b,102c is operatively connected to the gaze monitoring device 40a,40b and configured to determine a region of interest ROI based on the monitored gaze direction GD, and determine whether the region of interest ROI should be regarded as an anomaly from a stored baseline information of an interior of the vehicle. According to some embodiments an anomaly may be defined as a certain characteristic in the interior, that deviates from what may be considered normal/expected.

In the example illustration in Figure 1, the vehicle occupant VO is gazing at a dirty spot of the passenger seat. The gaze direction GD is illustrated in Figure 1 with an arrow from the eyes of the vehicle occupant VO onto the passenger seat, at the region of interest ROI. In the example, based on a stored baseline information of the passenger seat of the vehicle 1, the region of interest ROI is regarded as an anomaly due to misscolouring of the passenger seat at the region of interest ROI. The anomaly may however also be an object, such as an item forgotten by a previous vehicle occupant. Such as an item may be a bag, clothing or mobile phone etc.

An advantage with this first aspect is that an anomaly of the interior of the vehicle 1 can be determined without the need for an inspection by another person, which minimizes or even eliminates the need for the inspection by another person, but instead the gaze direction of the vehicle occupant VO is used for the determination of an anomaly of the interior of the vehicle 1.

According to some embodiments the gaze monitoring device 40a, 40b is configured to obtain an image of the interior of the vehicle.

According to some embodiments the gaze monitoring device 40a, 40b is configured to obtain an image of the region of interest ROI.

According to some embodiments the system 100 further comprises an interior camera 80a, 80b configured to obtain an image of the interior of the vehicle.

According to some embodiments the interior camera 80a, 80b is configured to obtain an image of the region of interest ROI. An advantage with the interior camera 80a, 80b is that the gaze monitoring device 40a, 40b can be used for only monitor a gaze direction GD of a vehicle occupant VO in relation to the vehicle 1, while the interior camera 80a, 80b can be used to only monitor the interior of the vehicle.

According to some embodiments the stored baseline information of an interior of the vehicle 1 is a stored baseline information image of a vehicle compartment part of the interior of the vehicle 1.

According to some embodiments, the stored baseline information image is at least any of a predefined image or an image captured by the one or more cameras at a time before the vehicle occupant enters the vehicle 1 or before the vehicle 1 arrived at or near a pickup location.

According to some embodiments the vehicle compartment part is a component of the vehicle 1. In an example, the component is a seat component, a door component or a floor mat component etc.

According to some embodiments the stored baseline information of an interior of the vehicle is a stored baseline information image of the interior of the vehicle. According to some embodiments the stored baseline information image of the interior of the vehicle is a three dimensional model of the interior of the vehicle 1.

According to some embodiments the obtained image of the interior of the vehicle 1 is compared with the stored baseline information image of the interior of the vehicle to determine whether the region of interest ROI should be regarded as an anomaly.

According to some embodiments image processing is used when comparing the obtained image of the interior of the vehicle 1 with the stored baseline information image of the interior of the vehicle.

According to some embodiments the obtained image of the interior of the vehicle 1 is compared with a stored baseline information image of the interior of the vehicle to determine a deviation from the stored baseline information image of the interior of the vehicle 1 and in accordance with a deviation that is above a predetermined threshold, determine that the region of interest ROI should be regarded as an anomaly.

According to some embodiments the deviation is determined based on object recognition of the obtained image of the interior of the vehicle 1. According to some embodiments the deviation is determined based on image analysis of the obtained image of the interior of the vehicle 1.

According to some embodiments the deviation from the stored baseline information image of the interior of the vehicle is caused by at least any of an identification of an object in the obtained image of the interior of the vehicle 1, an identification of a change of a shape of an object in the obtained image of the interior of the vehicle 1, an identification of a different color of an object in the obtained image of the interior of the vehicle 1, an identification of new pattern of an object in the obtained image of the interior of the vehicle 1.

According to some embodiments the processing circuitry 102a,102b,102c is further configured, to in response to the determination that the region of interest is an anomaly from the stored baseline information of the vehicle interior, initiate a remedial action to have the determined anomaly taken care of.

An advantage with this embodiment is that an inspection and/or a remedial action can be initiated only when considered necessary, thereby saving time for minimizing the down time when the vehicle cannot be used.

According to some embodiments the initiation of the remedial action comprises communicating a message with information about the anomaly to a vehicle interior cleaning service provider.

An advantage with this embodiment is that interior cleaning service provider can be informed remotely via the communicated message, and only when considered necessary, thereby saving time for minimizing the down time when the vehicle cannot be used. According to some embodiments the communicating a message further comprises location information data defining the geographical location of the vehicle 1, in order to notify a vehicle interior cleaning service provider in the vicinity of the vehicle 1.

According to some embodiments the gaze direction monitoring is performed while the vehicle is operating to provide a transport service to take the vehicle occupant to a destination.

An advantage with this embodiment is that the gaze direction monitoring is performed only when a vehicle occupant is present in the vehicle to use the determination of a region of interest based on each vehicle occupant when the vehicle is operating to provide a transport service.

According to some embodiments the region of interest ROI is determined based on when the accumulative time that the vehicle occupant VO is gazing in a certain gaze direction GD is above a predefined threshold time value and/or when the number of times over a predetermined time period that the vehicle occupant VO is gazing in the certain direction GD is above a predefined threshold number of times value.

An advantage with this embodiment is that the determination of the region of interest ROI can be more precise based on accumulative obtained data indicative a region of interest.

According to some embodiments the processing circuitry 102a,102b,102c is further configured to determine a region of interest heat map ROIHM, based on at least a first region of interest ROI, to visualize at least a first region of interest 1ROI to a user via a user interface 800a,800b,800c of the system 100 in order to ease up inspection of possible anomalies inside of the vehicle 1.

According to some embodiments the user interface 800a is a user interface of an on-board vehicle computer, as illustrated in Figure 1. According to some embodiments the user interface 800b is a user interface of an electronic device connectable to the vehicular system 100 via the wireless communication network 50, as illustrated in Figure 1. According to some embodiments the user interface 800c is a user interface of a remote portable electronic device connectable to the vehicular system 100 via a wireless communication network 50, as illustrated in Figure 1.

An advantage with this embodiment is that a region of interest ROI can be visualized via a user interface 800a,800b,800c e.g. in form of three dimensional region of interest heat map ROIHM graph onto an image representation of the interior of the vehicle 1. In the example illustration of Figure 1, a portable electronic device is used to visualize the region of interest heat map ROIHM with a at least a first region of interest 1ROI via the user interface 800c of the portable electronic device. In an example a vehicle interior cleaning service provider can prepare inspection and cleaning before entering into the vehicle using the visualization of the region of interest heat map ROIHM via the user interface of 800c of the portable electronic device.

According to some embodiments the processing circuitry 102a,102b,102c is further configured to identify a face expression of the vehicle occupant VO when gazing at the region of interest ROI, and determine a predefined feeling associated with the region of interest ROI based on the identified face expression of the vehicle occupant VO and based on predetermined generic face expressions of humans associated with predetermined feelings.

An advantage with this embodiment is that by combining the region of interest information with information about how the vehicle occupant feels when gazing at the region of interest, the determination whether the region of interest should be regarded as an anomaly can also include if the anomaly is positive or negative, e.g. fun or disgusting.

In an example this could be an indication on how urgent it is to inspect the vehicle. If for example the region of interest ROI is associated with a smile, i.e. fun, then there is a less urgency for inspecting the vehicle 1. However, if the region of interest ROI is associated with a face expression signaling disgust, then it is urgent to inspect the vehicle 1.

According to some embodiments the processing circuitry 102a,102b,102c is further configured to filter out a predetermined gaze direction in which the gaze direction GD of the vehicle occupant VO is determined as not being relevant for determining the region of interest ROI.

According to some embodiments at least a first predefined gaze direction GD is excluded from determination of a region of interest ROI. According to some embodiments the at least first predefined gaze direction GD excluded from determination is any of a gaze direction onto a second vehicle occupant 2VO, a gaze direction onto a dash board, a gaze direction onto a head-up display, and a gaze direction through any window. Further examples of when the at least first predefined gaze direction GD is excluded from determination of a region of interest ROI can for example comprise eye-catching features, such as a screen, a fancy air vent or other part, or colour/shape of a part of the interior, that are not to be regarded as anomalies to be taken care of. Thus, such eye-catching features should be regarded as part of the baseline. Further, sound generating parts or areas in the interior may catch the attention of a vehicle occupant, wherein he/she may gaze in the direction of the sound. Knowledge of such sound generating parts/areas may also be part of the baseline and excluded from determination of a region of interest ROI.

According to some embodiments the processing circuitry 102a,102b,102c is further configured, to determine the gaze direction GD of the vehicle occupant VO, determine the time the vehicle occupant VO is gazing in a certain direction, determine the number of times over a predetermined time period that the vehicle occupant VO is gazing in the certain direction GD, and identify a region in the gaze direction GD of the vehicle occupant VO as a region of interest ROI based on the accumulative time the vehicle occupant VO is gazing in the certain direction and/or the number of times over a predetermined time period that the vehicle occupant VO is gazing in the certain direction.

An advantage with this embodiment is that the determination of the region of interest ROI can be more precise based on accumulative obtained data indicative a region of interest.

According to some embodiments the processing circuitry 102a,102b,102c is further configured, to determine the gaze direction of a second vehicle occupant 2VO, determine the time the second vehicle occupant 2VO is gazing in a certain direction, determine the number of times over a predetermined time period that the second vehicle occupant 2VO is gazing in the certain direction, and identify that the region in the gaze direction GD of the vehicle occupant VO corresponds to the region in the gaze direction of the second vehicle occupant 2VO, and based on that both the vehicle occupant VO and the second vehicle occupant 2VO are gazing at the same region, identify the region as a region of interest ROI based on the accumulative time the vehicle occupant VO and the second vehicle occupant 2VO are gazing in the certain direction and/or the number of times over a predetermined time period that the vehicle occupant VO and the second vehicle occupant 2VO are gazing in the certain direction.

An advantage with this embodiment is that two different vehicle occupants have gazed at the same region a certain time and/or a certain number of times, which gives a more precise determination of the region of interest ROI.

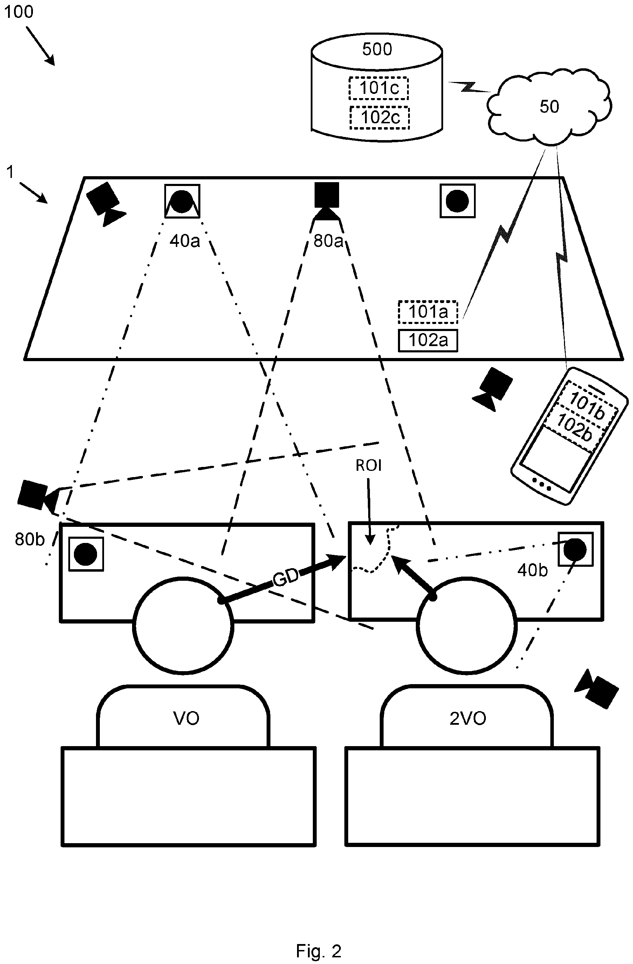

Figure 2 illustrates an example vehicular system 100 for determining anomalies inside of an autonomous vehicle according to an embodiment of the present disclosure. In Figure 2 there is no driver present but two vehicle occupants. In the example illustration in Figure 2 the vehicle occupant VO is seated in the back seat of the vehicle 1 next to a second vehicle occupant 2VO.

In the illustration in Figure 2 a first gaze monitoring device 40a is configured to monitor a gaze direction GD of a vehicle occupant VO in relation to the vehicle 1, and a second gaze monitoring device 40b is configured to monitor a gaze direction of a second vehicle occupant 2VO in relation to the vehicle 1. The illustration in Figure 2 further illustrates a first interior camera 80a configured to obtain an image of the interior of the vehicle 1, and a second interior camera 80b configured to obtain an image of the interior of the vehicle 1.

According to some embodiments, the region of interest ROI is determined to be regarded as an anomaly in a determination that the vehicle occupant VO and the second vehicle occupant 2VO are both gazing at the same region of interest ROI. In the illustration in Figure 2 both the vehicle occupant VO and the second vehicle occupant 2VO are both gazing at the upper left part of the passenger seat as the region of interest ROI which is then determined to be regarded as an anomaly.

According to some embodiments, the determination of the region of interest ROI is time stamped, and in a determination that a plural predefined different vehicle occupants have identified the same area as the region of interest ROI within a certain period of time, determine that the region of interest ROI should be regarded as an anomaly.

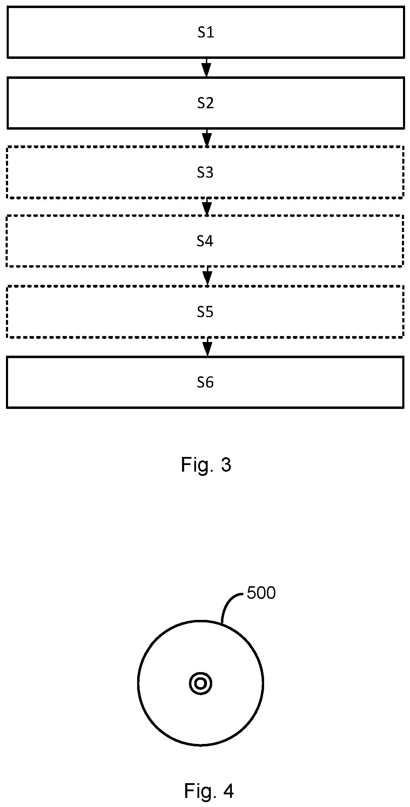

Figure 3 illustrates a flow chart of the method steps according to the second aspect of the disclosure.

The second aspect of this disclosure shows a method for determining anomalies inside of a vehicle 1. The method comprising the step of S1 monitoring a gaze direction GD of a vehicle occupant VO, the step of S2 determining a region of interest ROI based on the monitored gaze direction GD, and the step of S6 determining whether the region of interest ROI should be regarded as an anomaly from a stored baseline information of an interior of the vehicle.

An advantage with this second aspect is that an anomaly of the interior of the vehicle 1 can be determined without the need for an inspection by another person, which minimizes or even eliminates the need for the inspection by another person, but instead the gaze direction of the vehicle occupant is used for the determination of an anomaly of the interior of the vehicle.

According to some embodiments the method comprises, in response to the determination that the area of interest is an anomaly from the stored baseline information of the vehicle interior, initiating a remedial action to have the determined anomaly taken care of.

An advantage with this embodiment is that an inspection and/or a remedial action can be initiated only when considered necessary, thereby saving time for minimizing the down time when the vehicle 1 cannot be used.

According to some embodiments the initiation of the remedial action comprises communicating a message with information about the anomaly to a vehicle interior cleaning service provider.

An advantage with this embodiment is that interior cleaning service provider can be informed remotely via the communicated message, and only when considered necessary, thereby saving time for minimizing the down time when the vehicle 1 cannot be used.

According to some embodiments the gaze direction monitoring is performed while the vehicle 1 is operating to provide a transport service to take the vehicle occupant to a destination.

An advantage with this embodiment is that the gaze direction monitoring is performed only when a vehicle occupant is present in the vehicle to use the determination of a region of interest based on each vehicle occupant when the vehicle is operating to provide a transport service.

According to some embodiments the region of interest ROI is determined based on when the accumulative time that the vehicle occupant VO is gazing in a certain direction GD is above a predefined threshold time value and/or when the number of times over a predetermined time period that the vehicle occupant VO is gazing in the certain direction GD is above a predefined threshold number of times value.

An advantage with this embodiment is that the determination of the region of interest ROI can be more precise based on accumulative obtained data indicative a region of interest.

According to some embodiments the method further comprises the step of S3 determining a region of interest heat map ROIHM, based on at least a first region of interest ROI, to visualize the at least first region of interest 1ROI to a user via a user interface 800a,800b,800c of the system 100 in order to ease up inspection of possible anomalies inside of the vehicle 1.

An advantage with this embodiment is that a region of interest can be visualized via a user interface e.g. in form of three dimensional heat mat graph onto an image representation of the interior of the vehicle.

According to some embodiments the method further comprises the step of S4 identifying a face expression of the vehicle occupant VO when gazing at the region of interest ROI, and the step of S5 determining a predefined feeling associated with the region of interest ROI based on the identified face expression of the vehicle occupant VO and based on predetermined generic face expressions of humans associated with predetermined feelings.

An advantage with this embodiment is that by combining the region of interest information with information about how the vehicle occupant feels when gazing at the region of interest, the determination whether the region of interest should be regarded as an anomaly can also include if the anomaly is positive or negative, e.g. disgusting or fun.

Figure 4 illustrates a computer program product according to the third aspect of the disclosure.

The third aspect of this disclosure shows a computer program product the second aspect comprising a non-transitory computer readable medium, having thereon a computer program comprising program instructions, the computer program being loadable into a processing circuitry 102a,102b,102c and configured to cause execution of the method when the computer program is run by the processing circuitry 102a,102b,102c.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A vehicular system (100) for determining anomalies inside of a vehicle (1), the system (100) comprises:
a gaze monitoring device (40a,40b) configured to monitor a gaze direction (GD) of a vehicle occupant (VO) in relation to the vehicle (1);
a processing circuitry (102a,102b,102c) operatively connected to the gaze monitoring device (40a,40b) configured to:
- determine a region of interest (ROI) based on the monitored gaze direction (GD), and
- determine whether the region of interest (ROI) should be regarded as an anomaly from a stored baseline information of an interior of the vehicle.

2. The system (100) according to any of the preceding claims, wherein the processing circuitry (102a,102b,102c) is further configured to:
- in response to the determination that the region of interest is an anomaly from the stored baseline information of the vehicle interior initiating a remedial action to have the determined anomaly taken care of

3. The system (100) according to claim 2, wherein the initiation of the remedial action comprises communicating a message with information about the anomaly to a vehicle interior cleaning service provider.

4. The system (100) according to any of the preceding claims, wherein the gaze direction monitoring is performed while the vehicle is operating to provide a transport service to take the vehicle occupant to a destination.

5. The system (100) according to any of the preceding claims, wherein the region of interest (ROI) is determined based on when the accumulative time that the vehicle occupant (VO) is gazing in a certain gaze direction (GD) is above a predefined threshold time value and/or when the number of times over a predetermined time period that the vehicle occupant (VO) is gazing in the certain direction (GD) is above a predefined threshold number of times value.

6. The system (100) according to any of the preceding claims, wherein the processing circuitry (102a,102b,102c) is further configured to:
- determine a region of interest heat map (ROIHM), based on at least a first region of interest (ROI), to visualize at least a first region of interest (1ROI) to a user via a user interface (800a,800b,800c) of the system (100) in order to ease up inspection of possible anomalies inside of the vehicle (1).

7. The system (100) according to any of the preceding claims, wherein the processing circuitry (102a,102b,102c) is further configured to:
- identify a face expression of the vehicle occupant (VO) when gazing at the region of interest (ROI); and
- determine a predefined feeling associated with the region of interest (ROI) based on the identified face expression of the vehicle occupant (VO) and based on predetermined generic face expressions of humans associated with predetermined feelings.

8. A method for determining anomalies inside of a vehicle (1), the method comprising:
- (S1) monitoring a gaze direction (GD) of a vehicle occupant (VO),
- (S2) determining a region of interest (ROI) based on the monitored gaze direction (GD), and
- (S6) determining whether the region of interest (ROI) should be regarded as an anomaly from a stored baseline information of an interior of the vehicle.

9. The method according to claim 8, comprising in response to the determination that the region of interest is an anomaly from the stored baseline information of the vehicle interior initiating a remedial action to have the determined anomaly taken care of.

10. The method according to claim 9, wherein the initiation of the remedial action comprises communicating a message with information about the anomaly to a vehicle interior cleaning service provider.

11. The method according to any one of claims 8-10, wherein the gaze direction monitoring is performed while the vehicle is operating to provide a transport service to take the vehicle occupant to a destination.

12. The method according to according to any one of claims 8-11 wherein the region of interest (ROI) is determined based on when the accumulative time that the vehicle occupant (VO) is gazing in a certain direction (GD) is above a predefined threshold time value and/or when the number of times over a predetermined time period that the vehicle occupant (VO) is gazing in the certain direction (GD) is above a predefined threshold number of times value.

13. The method according to any one of claims 8-12 further comprising:
- (S3) determining a region of interest heat map (ROIHM), based on at least a first region of interest (ROI), to visualize the at least first region of interest (1ROI) to a user via a user interface (800a,800b,800c) of the system (100) in order to ease up inspection of possible anomalies inside of the vehicle (1).

14. The method according to any one of claims 8-13 further comprising:
- (S4) identifying a face expression of the vehicle occupant (VO) when gazing at the region of interest (ROI); and
- (S5) determining a predefined feeling associated with the region of interest (ROI) based on the identified face expression of the vehicle occupant (VO) and based on predetermined generic face expressions of humans associated with predetermined feelings.

15. A computer program product (500) comprising a non-transitory computer readable medium, having thereon a computer program comprising program instructions, the computer program being loadable into a processing circuitry (102a,102b,102c) and configured to cause execution of the method according to any of claims 8 through 14 when the computer program is run by the processing circuitry (102a,102b,102c).
